(19) Europäisches Patentamt
European Patent Office
Office européen des brevets

(11) **EP 2 194 641 B1**

(12) **EUROPÄISCHE PATENTSCHRIFT**

(45) Veröffentlichungstag und Bekanntmachung des Hinweises auf die Patenterteilung:
**21.09.2011 Patentblatt 2011/38**

(51) Int Cl.:
***H02P 6/18*** *(2006.01)*      ***H02P 21/00*** *(2006.01)*

(21) Anmeldenummer: **08170491.8**

(22) Anmeldetag: **02.12.2008**

(54) **System zur Ermittlung der anfänglichen Pollage eines Elektromotor-Läufers**

System for recording the initial pole position of a rotor of an electric motor

Système de détermination de la position initiale des pôles du rotor d'un moteur électrique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**09.06.2010 Patentblatt 2010/23**

(73) Patentinhaber: **Baumüller Nürnberg GmbH 90482 Nürnberg (DE)**

(72) Erfinder:
• **Barinberg, Dr., Viktor**
  **90491, Nürnberg (DE)**
• **Götz, Dr., Fritz Rainer**
  **90522, Oberasbach (DE)**

(74) Vertreter: **Götz, Georg Alois**
  **Intellectual Property IP-GÖTZ**
  **Patent- und Rechtsanwälte**
  **Am Literaturhaus, Königstrasse 70**
  **90402 Nürnberg (DE)**

(56) Entgegenhaltungen:
• LINKE M ET AL: "Sensorless speed and position control of synchronous machines using alternating carrier injection" ELECTRIC MACHINES AND DRIVES CONFERENCE, 2003. IEMDC'03. IEEE INTERNAT IONAL JUNE 1-4, 2003, PISCATAWAY, NJ, USA,IEEE, Bd. 2, 1. Juni 2003 (2003-06-01), Seiten 1211-1217, XP010643505 ISBN: 978-0-7803-7817-9
• TAKASHI AIHARA ET AL: "Sensorless Torque Control of Salient-Pole Synchronous Motor at Zero-Speed Operation" IEEE TRANSACTIONS ON POWER ELECTRONICS, IEEE SERVICE CENTER, PISCATAWAY, NJ, US, Bd. 14, Nr. 1, 1. Januar 1999 (1999-01-01) , XP011043251 ISSN: 0885-8993

EP 2 194 641 B1

**Beschreibung**

Die Erfindung bezieht sich auf ein System oder Verfahren zur Ermittlung der anfänglichen Pollage eines Läufers eines Elektromotors, insbesondere eines Permanentmagnet-Läufers einer elektrischen bürstenlosen Linear- oder Rotationsmaschine oder eines Synchronmotors. Die anfängliche Pollage soll einer nachfolgenden feldorientierten Antriebsregelung dienen. Zur Ermittlung der anfänglichen Pollage wird ein periodisches elektrisches Testsignal in Phasenwicklungen des Elektromotors eingeprägt, wobei die Phasenwicklungen von ferromagnetischem Material wie beispielsweise Eisen durchsetzt sind. Das in Reaktion auf das Testsignal entstehende Antwortsignal aus dem elektrischen Motor wird im Antriebsregelkreis gemessen und ausgewertet, woraus die Pollage und/oder Magnetflussrichtung des Läufers geschätzt und ein entsprechendes rotorbezogenes d,q-Koordinatensystem deckungsgleich mit und/oder längs der realen/physikalischen Magnetflussrichtung des Läufers ausgerichtet werden. Dann ist noch die Orientierung des d,q-Koordinatensystems über eine Auswertung des Spektrums der Antwortsignale anhand der Polarität oder Orientierung der (realen/physikalischen) Magnetflussrichtung des Läufers zu überprüfen, wozu das Testsignal vorher zur Herbeiführung einer magnetischen Sättigung des ferromagnetischen Materials in den Phasenwicklungen angepasst wurde. Ergibt die Prüfung eine falsche Orientierung, ist eine Korrektur der Pollage um 180 Grad notwendig.

Zum Stand der Technik wird auf DE 100 56 879 C1 sowie auf die folgende Nicht-Patentliteratur verwiesen: Joohn Sheok Kim, Seung Ki Sul "New Stand-still Position Detection Strategy For PMSM Drive Without Rotational Transducers", APEC '94, Ninth Annual Applied Power Electronics Conference and Exposition, Conference Proceedings, New York, NY, USA, IEEE 1994, S. 363-369, Vol. 1; BRUNOTTE, C., SCHUMACHER, W.: "Detection of the starting rotor angel of a pmsm at standstill", 7th European Conference on Power Electronics and Applications (Proceedings EPE), 1997, Trondheim, Norwegen, S. 1250-1253; M. Linke, R. Kennel, J. Holtz: "Sensorless speed and position control of synchronous machines using alternating carrier injection", IEEE International Electric Machines and Drives Conference IEMDC'03, Madison/Wi., USA, June 1-4, 2003; T. Aihara, A. Toba, T. Yanase, A. Mashimo and K. Endo: "Sensorless torque control of salient-pole synchronous motor at zerospeed operation", IEEE Trans. Power Electron., vol. 14, no. 1, Jan. 1999, pp.202-208; LOCCI N et al: "Rotor position detection in variable reluctance motors", ELROMA-92, technical papers of the third International Conference on Electrical Rotating Machines, Bombay, India, 15-16 Jan. 1992, pages VIA/60-7, vol. 2, XP002207172 1992, Vadodara, India, Electr. Res. & Dev. Assoc, India.

DE 100 56 879 C1 beschreibt ein System zur Ermittlung des elektrischen Startrotorwinkels anhand eines Verhältnisses eines Maßes der Grundwelle und eines Maßes der ersten Oberwelle aus Stromverläufen, die im Elektromotor auf eine periodische Testspannung zurückgehen. Indem die periodische Testspannung auf die drei Phasenanschlüsse eines permanentmagneterregten Drehstrom-Synchronmotors gegeben wird, und zwar mit einer relativ großen Spannungsamplitude zur Sicherstellung der EisenSättigung, ist nicht dafür Sorge getragen, dass im Synchronmotor Drehmomente in störendem Umfang vermieden sind. Dies kann leicht zu einem Messergebnisse verfälschenden "Motorwackeln" führen. Außerdem ist der Startrotorwinkel über ein numerisch komplexes Verfahren mit der Ermittlung von drei Unbekannten aus drei Gleichungen zu ermitteln, wobei komplizierte mathematische Operationen wie Arkustangenz oder dergleichen zu bewältigen sind. Dies erhöht weiter die Stör- und Fehleranfälligkeit.

Nach Kim et al. "New Stand-still Position Detection Strategy for ..." wird anstelle eines Lagegebers der Einsatz eines an sich bekannten Injektionsverfahrens vorgeschlagen, um den Rotorflusswinkel (Pollage) entsprechend der tatsächlichen Rotorposition zu ermitteln. Die Stromregelung wird mit der Injektion eines sinusförmigen Teststromes relativ hoher Frequenz in die Statorwicklungen eines Synchronmotors gestartet. Der Flusswinkel (Pollage) wird dann über eine Fast-Fourier-Transformation anhand der Komponenten der zweiten Schwingungsharmonischen ermittelt. Über die Komponente der zweiten Harmonischen wird außerdem noch die Polarität des magnetischen Flusses detektiert: Ist der Komponentenwert der zweiten Harmonischen aus der Fast-Fourier-Transformation positiv, dann ist der magnetischen Nordpol detektiert.

Ein für niedrigere Geschwindigkeiten bis einschließlich Stillstand geeignetes Injektionsverfahren, wobei zur Ermittlung der Pollage stromführende Statorleiter mit einer Testsignalquelle relativ hoher Frequenz gekoppelt werden, und die resultierenden Statorströme auf lageabhängige Anisotropien in der magnetischen Struktur der elektrischen Maschine hin ausgewertet werden, um daraus auf die Läufergeschwindigkeit und/oder Lage (Pollage) zu schließen, ergibt sich auch aus Marco Linke et al. "Sensorless speed and position control of a synchronous machine using alternating carrier injection". Jedoch kann dieses Verfahren für sich genommen nicht zwischen positiver und negativer Orientierung der magnetischen Flussrichtung des Läufers unterscheiden. Beim Anlauf des Elektromotors liegen so keine eindeutigen Ergebnisse vor, es ist ein Winkelfehler von 180° möglich.

N. Locci et al. "Rotor position detection in variable reluctance motors" beschreibt die Bestimmung der Rotorposition bei Reluktanzmotoren, also Motoren ohne Permanentmagnete. Folglich ist dabei eine Auswertung einer durch Permanentmagnete hervorgerufenen Sättigung nicht gegeben. Vielmehr wird die Herleitung einer Gleichung für die Sternpunktspannung der Wicklung und die experimentelle Prüfung dieser Gleichung beschrieben. Ferner wird noch ein Vergleich von simulierten und gemessenen Oberwellen angesprochen.

C. Brunotte et al. "Detection of a starting rotor angel of a pmsm at standstill" schlägt zur Bestimmung des elektrischen Startrotorwinkels vor, einen Synchronmotor mit Permanentmagneterregung mit einem sinusförmigen Strom von 500 Hz zu beaufschlagen. Von einem Antwortstrom wird das Spektrum zur Bestimmung des elektrischen Rotorwinkels ausgewertet. Aufgrund von induktiven Sättigungseffekten und daraus resultierender Asymmetrien des Stromverlaufs kann die Stellung des mit Spulen bzw. Induktivitäten ausgestatteten Stators des Synchronmotors gegenüber dem Permanentmagnet-Rotor ermittelt werden. Beispielsweise anhand einer Fast-Fourier-Transformation wird aus dem gemessenen Stromverlauf der Koeffizient der zweiten Harmonischen des Spektrums bestimmt. Dieser Koeffizient soll ein Maß für den elektrischen Rotorwinkel darstellen. Alternativ zur Fast-Fourier-Transformation wird ein mathematischer Algorithmus vorgeschlagen, der auf einer Integration der dritten Potenz des Antwortstroms über eine Mehrzahl vollständiger Perioden basiert. Diese Integration ist proportional zur Größe der zweiten Harmonischen.

Wie bereits angesprochen, ist das Hochfrequenz-Injektionsverfahren unter Auswertung von Anisotropien des Elektromotors nicht in der Lage, zwischen positiver und negativer Richtung der d-Achse im rotorbezogenen Koordinatensystem zu unterscheiden. Deshalb ist die Ermittlung der Pollage allein durch das Hochfrequenz-Injektionsverfahren doppeldeutig, und es kann ein Fehler von etwa 180° (elektrisch) auftreten. Um diese Doppeldeutigkeit zu eliminieren, ist in Takashi Aihara et al. "Sensorless torque control of a salient-pole synchronous motor at zero-speed operation" ein gattungsgemäßes Verfahren beschrieben (siehe dortige Figur 10 und Seiten 205-206), wonach die Pollagesuche in zwei Schritten abläuft. In einem ersten Schritt wird das oben angesprochene Injektionsverfahren für sich genommen verwendet, bis eine Nachführregelung das interne, rotorbezogene d,q-Koordinatensystem bzw. die Pollage der tatsächlichen (physikalischen) Läufer-Magnetflussrichtung nachgeführt hat ("Einrasten" des Nachführ-Reglers). Allerdings ist die Pfeilspitzen-Orientierung der Achsen des rotorbezogenen d,q-Koordinatensystems gegenüber der tatsächlichen Magnetfluss-Polorientierung noch nicht eindeutig; es kann noch ein 180 Winkelgrad-Fehler bestehen. Zur Abhilfe wird in einem zweiten Schritt der Sättigungseffekt ausgenutzt. In die Motorwicklungen wird eine Reihe von Spannungsimpulsen eingeprägt. Die Unterschiede zwischen den positiven und negativen Scheitelwerten aufeinander folgender, alternierender Stromhalbwellen informieren darüber, ob eine 180°-Korrektur notwendig ist. Allerdings ist dieses Verfahren für den industriellen Einsatz zu unzuverlässig. Das Sättigungsverhalten von Elektromotoren unterschiedlicher Typen variiert sehr, und ein eindeutiger Sättigungsgrad wird normalerweise mit einer Ansteuerung des Ein- bis Zweifachen des Motor-Nennstroms erreicht. Bei der Verfahrensbeschreibung wird kein numerisches Kriterium angegeben, das zeigt, ob die Stromimpulse für ein plausibles Ergebnis ausreichend groß sind bzw. ob die Sättigung genügend ausgeprägt ist. Ist dies nicht der Fall, sind die Unterschiede zwischen den positiven und negativen Stromscheitelwerten sehr bzw. zu gering, weil sie dann möglicherweise in der gleichen Größenordnung wie Rauschen oder dem Gleichstrom-Offset bei der Messung liegen.

Der Erfindung liegt die Aufgabe zugrunde, ein Verfahren zur Pollageermittlung zu schaffen, das auch bei industriellem Einsatz in störträchtiger Umgebung mit starken Störeinflüssen hinsichtlich der vorzeichenmäßigen Pollageorientierung eindeutige und zuverlässige Ergebnisse liefert. Zur Lösung wird auf das im Anspruch 1 angegebene Pollageermittlungsverfahren verwiesen. Optionale, vorteilhafte Ausgestaltungen dieser Erfindung ergeben sich aus den abhängigen Ansprüchen.

Der oben angesprochene Stand der Technik lehrt allein die Einprägung einer vergrößerten Spannungsamplitude als Testsignal in die Motorwicklungen zwecks Feststellung der Magnetfluss- bzw. Pollagepolarität. Damit ist nicht sichergestellt, dass der Sättigungsbereich des die Motorinduktivitäten durchsetzenden Eisens so erreicht wird, dass die auszuwertenden Nicht-Linearitäten in ausreichendem Umfang auftreten. Diesem nachteiligen Gesichtspunkt wird erfindungsgemäß durch einen Plausibilitätstest begegnet, nämlich vor der Prüfung des Vorzeichens, der Pfeilrichtung beziehungsweise der Orientierung der Pollage eine Überprüfung der magnetischen Eisensättigung auf einen vorbestimmten Mindestpegel hin erfolgen zu lassen. Damit ist gewährleistet, dass der gewünschte Sättigungseffekt zur Auslösung der auszuwertenden Nicht-Linearitäten überhaupt ausreichend eingetreten ist.

Dazu wird gemäß einer zweckmäßigen optionalen Erfindungsausbildung eine harmonische Analyse, eine Fourier- oder sonstige Spektralanalyse des auf das Testsignal hin erfolgenden Antwortsignals durchgeführt. Dann wird ein Spektralanteil höherer Frequenz mit einem niederer Frequenz daraufhin verglichen, ob der Spektralanteil höherer Frequenz, der auf die Nicht-Linearitäten wegen Eisensättigung zurückgeht, ausreichend groß ist. Insbesondere bei Verwendung einer Fourier-Analyse lässt sich eine Zerlegung des Antwortsignals zumindest in eine erste und eine zweite Harmonische durchführen. Weist die Amplitude der zweiten Harmonischen keinen ausreichenden Bruchteil zweckmäßig in der Größenordnung von 2%-6% der Amplitude der ersten Harmonischen auf, dann besteht die Gefahr, dass die Auswertung nicht nur die gezielt herbeigeführten Nicht-Linearitäten, sondern auch Störeffekte erfasst.

Um einer Störung des Antwortsignals und damit des zugehörigen Auswerteergebnisses durch Gleichspannungs- oder Gleichstrom-Offset bei der Messung vorzubeugen, wird nach einer optionalen Erfindungsausbildung vorgeschlagen, bei der Überprüfung der Sättigung des die Motorinduktivitäten durchsetzenden, ferromagnetischen Materials Mittel zur Elimination und/oder Kompensation eines Offset-Pegels des Antwortsignals einzusetzen. Nach einer Konkretisierung dieses Gedankens können diese Mittel mathematische Methoden der quadratischen Mittelwertbildung bei der Verarbeitung der ersten Harmonischen des Antwortsignals umfassen.

Der Vermeidung von Störungen und der Förderung der Zuverlässigkeit der Pollageermittlung dient es ferner, wenn während der Ermittlung der anfänglichen Pollage ein etwaiger Lage-, Geschwindigkeits- und/oder Stromregler des Antriebsregelkreises in einem ausgeschalteten oder sonst inaktiven Zustand gehalten wird. Damit sind nicht nur Quellen für elektrische Störungen, sondern auch mechanische Störbewegungen ausgeschaltet.

Wie an sich bekannt, wird unmittelbar vor bzw. zu Beginn der Sättigungsüberprüfung die Amplitude des Testsignals für einen begrenzten Zeitabschnitt erhöht und/oder die Frequenz erniedrigt (letzteres, um die induktive Impedanz zu erniedrigen bzw. den Stromfluss ausreichend groß zu halten). Dabei ist es zweckmäßig, innerhalb dieses Zeitabschnitts für die ersten fünf Perioden des Testsignals das Spektrum des Antwortsignals noch nicht auszuwerten, damit etwaige Einschwingvorgänge vor der eigentlichen Auswertung abklingen können. Andererseits ist es an sich bekannt, zumindest drei Testsignalperioden für die Auswertung zu verwenden.

Es liegt im Rahmen der Erfindung, zur Ermittlung der anfänglichen Pollage ein für niedrigere Geschwindigkeiten bis einschließlich Stillstand des Elektromotors geeignetes, an sich bekanntes Injektionsverfahren zu verwenden mit dem Vorteil, dass dabei als Testsignale nur relativ niedrige Spannungs- oder Stromwerte notwendig sind. Diese können sich beispielsweise zwischen 10% und 30% des Nennstroms des jeweiligen Elektromotors bewegen. Wird dann im Rahmen einer feldorientierten Regelung der Teststrom als Längsstromkomponente in Richtung der d-Achse eines läuferbezogenen d-, q-Koordinatensystems eingeprägt, wird die Entstehung mechanischer Störmomente vermieden.

Gemäß einer weiteren, vorteilhaften Erfindungsausbildung wird vor der Überprüfung der Sättigung des ferromagnetischen Materials ein Nachführregler eingesetzt, welcher die Richtung der d-Achse des rotorbezogenen d-, q-Koordinatensystems der physikalischen/realen Magnetflussrichtung des Läufers nachführt. Dies kann zweckmäßig mit einem relativ einfach realisierbaren Proportional-Integralglied mit nachgeordneter Integration erfolgen. Das gegebenenfalls vorher gefilterte und/oder bewertete Antwortsignal lässt sich so in einen Winkelwert umrechnen, der der Pollage oder Magnetflussrichtung des Elektromotors entspricht. Insbesondere im Zusammenhang mit dem Einsatz des vorgenannten Injektionsverfahrens wird der Vorteil erzielt, dass sich mit der Einprägung eines relativ kleinen und hochfrequenten Stroms zunächst (nur) die Richtung der d-Achse, wie im feldorientierten Antriebsregelkreis geschätzt, in Deckung mit der tatsächlichen Magnetflussrichtung gebracht wird. Da der Nachführregler nur mit einem PI-Regler und einem nachgeordneten Integrationsglied ausgestattet zu sein braucht, lässt sich ein Rechenzeit- und Speicherplatz-intensiver Aufwand an mathematischen Operationen vermeiden.

Das erfindungsgemäße Verfahren eignet sich zum Einsatz für geregelte Synchronmotoren ohne Absolutwertgeber, also solche, welche beispielsweise nur mit einem Inkrementalgeber ausgestattet sind. Bei jedem erneuten Anlauf kann dann das erfindungsgemäße Pollage-Ermittlungsverfahren Einsatz finden. Bei Synchronmotoren mit Absolutwertgeber ist das erfindungsgemäße Pollage-Ermittlungsverfahren vorteilhaft für die Inbetriebnahme: Mit Hilfe der erfindungsgemäßen Pollageermittlung lässt sich der Versatz des Nullpunkts des Absolutwertgebers zur Pollage zuverlässig feststellen.

Weitere Einzelheiten, Merkmale, Merkmalskombinationen, Vorteile und Wirkungen auf der Basis der Erfindung ergeben sich aus der nachfolgenden Beschreibung eines bevorzugten Ausführungsbeispiels der Erfindung sowie den Zeichnungen. Diese zeigen in:

Figur 1 das Grundprinzip des zur Pollageermittlung erfindungsgemäß eingesetzten Injektionsverfahrens anhand eines Blockschaltbilds,

Figur 2 die Wirkungsweise des gemäß Figur 1 eingesetzten Nachführreglers anhand des im entsprechenden Antriebsregelkreis geschätzten, rotorbezogenen Koordinatensystems mit den geschätzten Achsen $d_e$, $q_e$ gegenüber dem realen/physikalischen rotorbezogenen Koordinatensystem mit den Achsen d, q,

Figur 3 den Ablauf des erfindungsgemäßen Pollage-Ermittlungsverfahrens anhand eines Flussdiagramms, und

Figur 4 die Wirkungsweise des erfindungsgemäßen Pollage- Ermittlungsverfahrens anhand von oszilloskopierten Strom- /Zeit-Diagrammen und Winkellage/Zeit-Diagrammen.

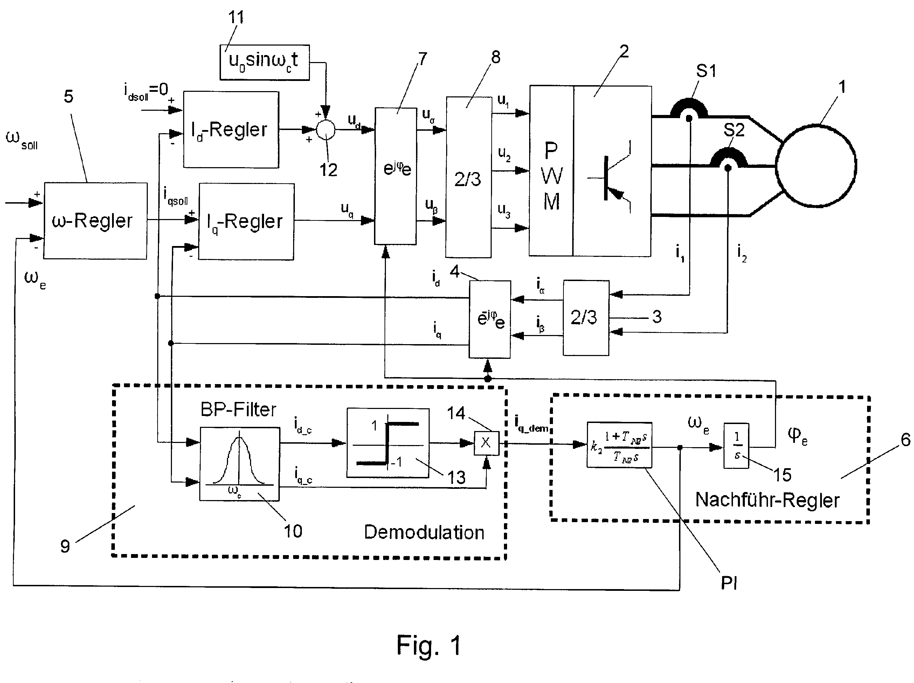

Gemäß Figur 1 wird der Stator einer bürstenlosen elektrischen Maschine, beispielsweise eines Synchronmotors mit Permanentmagnetläufer (letzterer nicht gezeichnet), von einem auf der Basis von Pulsweitenmodulation (PWM) arbeitenden Umrichter 2 mit einem dreiphasigen Drehstrom betrieben. Für eine Stromregelung werden über Stromsensoren S1, S2 vom Stator 1 die beiden Phasenströme $i_1$, $i_2$ abgegriffen bzw. gemessen. Die Messwerte werden in einer 3-zu-2-Phasen-Transformationseinheit 3 auf ein statorbezogenes, orthogonales $\alpha$, $\beta$-Koordinatensystem abgebildet. Im Zuge der Transformation werden zwei den Statorstrom repräsentierende Vektorkomponenten $i_\alpha$, $i_\beta$ erzeugt und an eine zweite, nachgeordnete Koordinaten-Transformationseinheit 4 zugeleitet.

Diese ist dazu ausgebildet, eine Koordinaten-

transformation vom statorbezogenen $\alpha$, $\beta$-Koordinatensystem in ein rotorbezogenes d, q-Koordinatensystem mit der Ausgabe der Strom-Längs- und Quervektorkomponenten $i_d$, $i_q$ vorzunehmen. Diese werden als Istwerte den Längsstrom- und Querstromreglern $I_d$, $I_q$ zum Soll-/Istwert-Vergleich mit entsprechenden Längs- und Querstrom-Sollwerten $i_{dsoll}$, $i_{qsoll}$ zugeführt. Wie an sich in der Fachwelt üblich, wird die Längsstrom-Sollwertvorgabe $i_{dsoll}$ auf Null gesetzt, während der Querstromregler die Sollwertvorgabe $i_{qsoll}$ von einem vorgeordneten Geschwindigkeitsregler 5 empfängt. Dieser geht von einem Vergleich eines Drehzahlsollwerts $\omega_{soll}$ mit dem von einem Nachführregler 6 ausgegebenen Schätz- bzw. Ermittlungswert für eine elektrische Ist-Drehzahl $\omega_e$ aus. Aus dem Nachführregler wird ferner ein ermittelter elektrischer Winkel $\varphi_e$ als Pollage ausgegeben und der zweiten Transformationseinheit 4 sowie einer dazu komplementären dritten Transformationseinheit 7 zugeführt. Letzterer empfängt ferner die von den Stromreglern $I_d$, $I_q$ vorgegebenen Längs- und Querspannungsvektorkomponenten $u_d$, $u_q$ und bildet diese in das statorbezogene $\alpha$,$\beta$-Koordinatensystem mit den vorgegebenen Spannungsvektorkomponenten $u_\alpha$, $u_\beta$ ab. Letztere Spannungsvektorkomponenten werden von einem nachgeordneten 2-zu-3-Phasentransformationseinheit 8 empfangen, welche die Spannungsvorgabe in drei dem Drehstromsystem entsprechende Phasen $u_1$, $u_2$, $u_3$ für den nachgeordneten Umrichter 2 umsetzt.

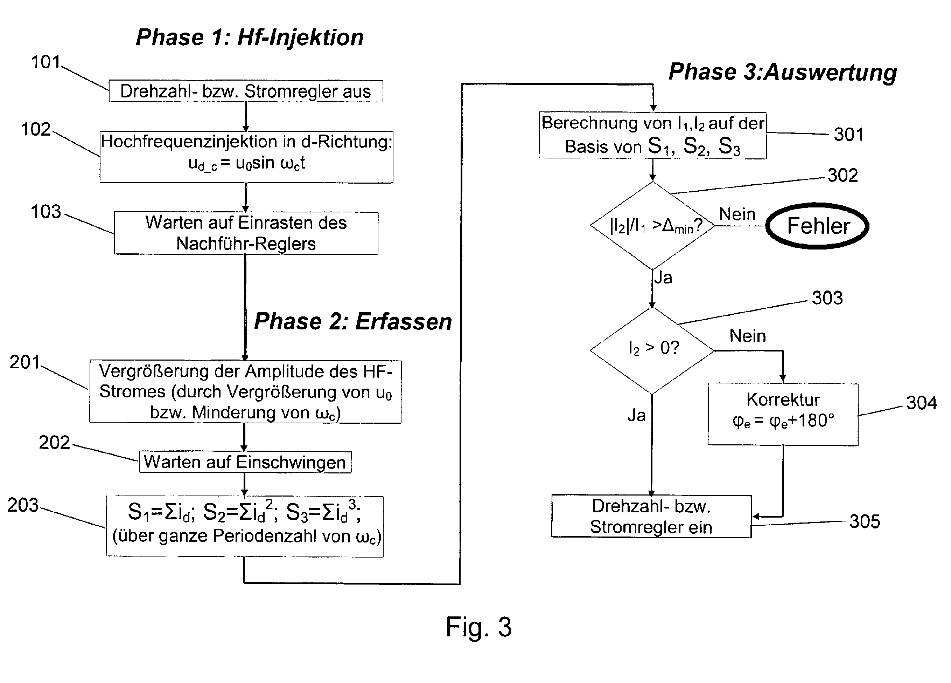

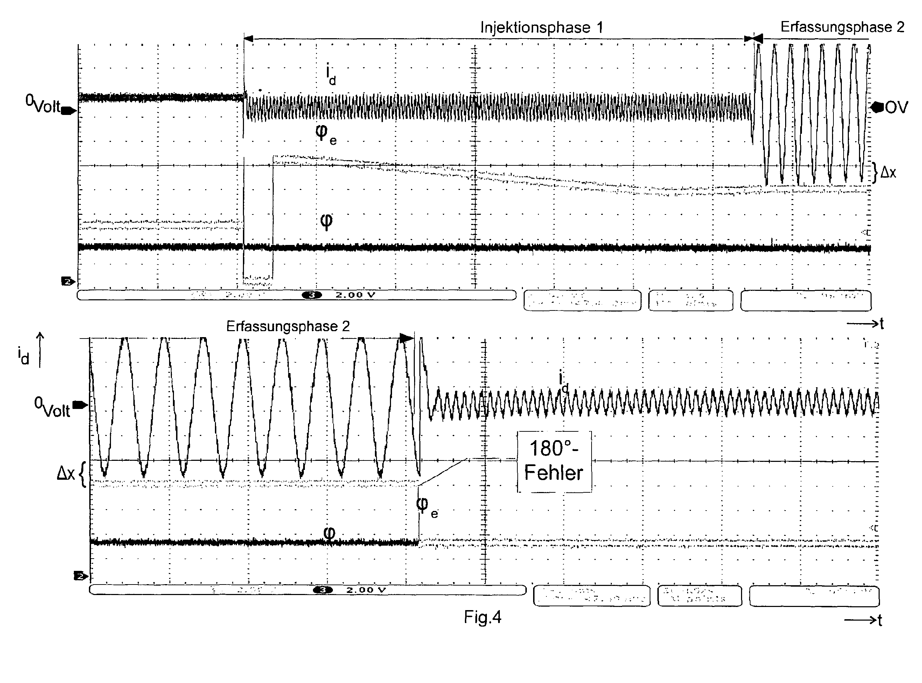

Gemäß Figur 1 werden die rotorbezogenen Vektor-Stromkomponenten $i_d$, $i_q$ aus der zweiten Koordinaten-Transformationseinheit 4 einem Demodulationsmodul 9 und darin einem Bandpass-Filter 10 zugeführt, dessen Durchlassfrequenz einer Träger-Kreisfrequenz $\omega_c$ entspricht. Auf der Basis dieser Träger-Kreisfrequenz $\omega_c$ arbeitet bzw. schwingt eine Injektionssignalquelle 11, über deren Ausgang ein Testsignal mit der Amplitude $u_0$ und der Trägerfrequenz $\omega_c$ (beispielsweise ein Kilohertz) in die Statorströme $i_1$, $i_2$ eingekoppelt wird. Die Einkopplung erfolgt über ein Summierglied 12, dessen zweiter Eingang mit dem Stromregler $I_d$ für die Längsstrom-Vektorkomponente verbunden ist. Der Ausgang des Summierglieds 12 ist mit dem Längsspannungseingang der dritten Koordinaten-Transformationseinheit 7 verbunden, so dass über die beiden Transformationseinheiten 7, 8 das Testsignal mit der Träger-Kreisfrequenz $\omega_c$ über den Umrichter 2 in die Stromkreise des Stators 1 eingekoppelt und daraus über die beiden Strom-Sensoren S1, S2 von der ersten Transformationseinheit 3 wieder abgegriffen werden kann. Da die Träger-Kreisfrequenz $\omega_c$ der Injektionssignalquelle 11 bekannt ist, lässt sich beim Demodulationsmodul 9 das Bandpassfilter 10 mit seinem Durchlass-Bereich auf diese Träger-Kreisfrequenz $\omega_c$ fokussieren. Infolgedessen stehen am Ausgang des Bandpass-Filters 10 Strom-Vektorkomponenten $i_{d\_c}$, $i_{q\_c}$ zur Verfügung, die als Frequenzanteile im Wesentlichen nur die Träger-Kreisfrequenz $\omega_c$ entsprechend dem Testsignal enthalten, das über das Summierglied 12 in die Statorwicklungen eingespeist wird. Die vom Bandpassfilter herausgefilterte Strom-Vektorkomponente $i_{q\_c}$ entspricht einem von der magnetischen Anisotropie abhängigen Korrektursignal, worin die Information über die Läuferlage enthalten ist. Wegen weiterer Einzelheiten und theoretischer Hintergründe wird auf O. C. Ferreira und R. Kennel "Encoderless control of industrial servo drives", 12th International Power Electronics and Motion Control Conference, August 2006, Seiten 1962-1967, insbesondere dortige Figuren 3 und 4 mit zugehöriger Beschreibung verwiesen. Danach ist es vorteilhaft, ein alternierendes Testsignal mit hoher Träger-Kreisfrequenz $\omega_c$ nur der Spannungsvektor-Längskomponente $u_d$ aus dem entsprechenden Reglerausgang einzuprägen bzw. zu überlagern, um nachteilige Einflüsse auf die für die Drehmomenterzeugung relevanten Strom/Spannungsvektor-Querkomponenten $i_q$, $u_q$ zu vermeiden. Nach dem Herausfiltern der Trägerfrequenzstrom-Querkomponente $i_{q\_c}$ im Demodulator 9 wird diese bezüglich der Trägerfrequenzstrom-Längskomponente $i_{dc}$ gleichgerichtet, was mittels eines Signumsgliedes 13 und eines nachgeschalteten Multipliziergliedes 14 erfolgt. Dazu wird die Längskomponente $i_{d\_c}$ des Trägerstromvektors aus dem Bandpass-Filter 10 dem Eingang des Signumsgliedes 13 zugeführt. Der Ausgang des Signumsgliedes 13 ist mit dem Eingang des Multiplizierglieds 14 verbunden. Der andere Multiplikatoreingang ist mit dem Bandpass-Ausgang für die Querkomponente des Trägerstromvektors verbunden. Der Ausgang des Multiplizierglieds 14 bildet gleichzeitig die Ausgangsschnittstelle des Demodulationsmoduls 9 für die demodulierten Hochfrequenzanteile $i_{q\_dem}$ der Querstrom-Vektorkomponente $i_q$.

Gemäß Figur 1 wird der demodulierte Querstrom $i_{q\_dem}$ aus dem Demodulationsmodul 9 einem Proportional-Integralregler PI im Nachführregler 6 zugeführt. Dessen Ausgang bildet eine Ausgangsschnittstelle aus dem Nachführregler 6 für die geschätzte elektrische Drehzahl $\omega_e$, die dem oben angesprochenen Geschwindigkeitsregler 5 zugeführt wird. Über ein dem PI-Glied nachgeschaltetes Integrationsglied 15 wird schließlich die geschätzte Pollage $\varphi_e$ bzw. elektrische Winkellage gewonnen, welche als Eingangsparameter den Koordinaten-Transformationseinheiten 4, 7 zugeführt wird.

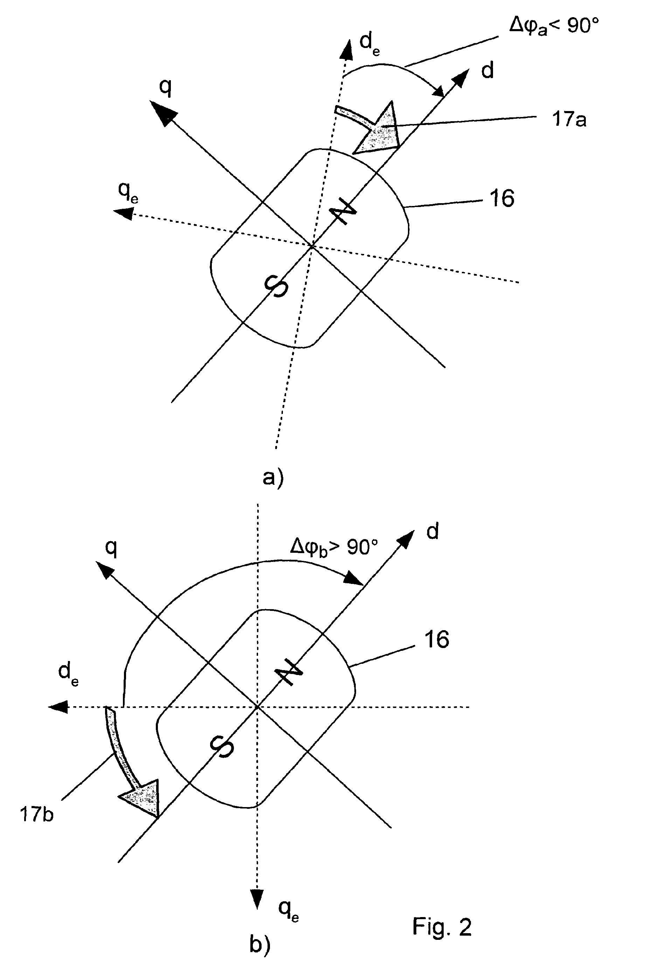

In Figur 2, Teile a) und b), ist die Wirkungsweise des Nachführreglers zum Einschaltzeitpunkt des Pollage-Ermittlungssystems veranschaulicht. Mit durchgezogenem Koordinaten-Achsenkreuz d, q ist die reale bzw. physikalische Lage des Polrads bzw. Permanentmagnetläufers mit der Polpaarzahl p=1, und mit gestricheltem Koordinaten-Achsenkreuz $d_e$, $q_e$ die ursprünglich über den Nachführregler 6 geschätzte Polradlage gezeichnet. Gemäß oberen Teil a) der Figur 2 beträgt die Winkellageabweichung $\Delta\varphi_a$ zwischen der Magnetflussrichtung S-N des zweipoligen Polrades 16 bzw. der d-Achse im rotorbezogenen, realen/physikalischen d, q-Koordinatensystem und der $d_e$-Achse des im feldorientierten Antriebsregelkreis geschätzten rotorbezogenen $d_a$, $q_e$-Koordinatensystems weniger als 90 Winkelgrad.

Der Nachführregler 6 (siehe Figur 1) verstellt bzw. verdreht die reglerintern geschätzten Koordinatenkreuz-Achsen $d_e$, $q_e$ (vgl. Nachführdrehung 17a) so, dass die geschätzten Achsen $d_e$, $q_e$ sowohl mit ihren Richtungen (Pfeilschäften) als auch ihre Orientierungen (Pfeilspitzen) kongruent anhand den realen Polradachsen d, q ausgerichtet sind. Beträgt allerdings gemäß Figur 2b) die Winkelabweichung $\Delta\varphi_b$ zwischen den realen Achsen d, q und den geschätzten Achsen $d_e$, $q_e$ mehr als 90°, wird über den Nachführregler 6 eine entgegengesetzte Nachführdrehung 17b (entgegen dem Uhrzeigersinn, während nach Figur 2a) die Nachführdrehung 17a im Uhrzeigersinn berechnet ist) errechnet, so dass zwar die geschätzten Achsen $d_e$, $q_e$ sich in ihren Richtungen (Pfeilschäften) mit den realen Polradachsen d, q decken, ihre Orientierungen (Pfeilspitzen) aber in entgegengesetzte Richtungen weisen. Infolgedessen liegt keine exakte Übereinstimmung der geschätzten Pollage mit der realen Magnetflussrichtung des Polrades 16 vor, vielmehr besteht ein Winkelfehler von 180°. Dieser Orientierungsfehler lässt sich mit dem nachfolgend erläuterten Pollage-Ermittlungsverfahren eindeutig und zuverlässig korrigieren.

Gemäß Ausführungsbeispiel in Figur 3 lässt sich die erfindungsgemäße Pollagesuche unterteilen in

　　　Phase 1: Hochfrequenz-Injektionsverfahren
　　　Phase 2: Erfassen der auf die Eisensättigung zurückgehenden Effekte
　　　Phase 3: Auswertung der erfassten Werte

In Phase 1 werden in einem ersten Schritt 101 die Drehzahl- und Stromregler 5, $I_d$, $I_q$ inaktiviert. Zweckmäßig wird der Synchronmotor in Stillstand versetzt. In einem nächsten Schritt 102 wird aus der Injektionssignalquelle 11 (Figur 1) relativ hochfrequenter Strom in Richtung der d-Achse des rotorbezogenen d, q-Koordinatensystems injiziert. In einem nächsten Schritt 103 wird darauf gewartet, dass der Nachführregler 6 für eine Ausregelung der Regeldifferenz sorgt bzw. die Nachführdrehung 17a, 17b so berechnet, dass zumindest schon die Richtungen bzw. die Pfeilschäfte der geschätzten, rotorbezogenen $d_e$, $q_e$-Koordinatenachsen sich mit den realen bzw. physikalischen Koordinatenachsen d, q bzw. mit der Magnetflussrichtung des Polrads 16 decken ("Einrasten"). Allerdings ist das Hochfrequenz-Injektionsverfahren gemäß Schritt 102 für sich allein nicht in der Lage, zwischen positiver und negativer Richtung der d-Achse zu unterscheiden. Es ist nicht sicher, ob nach dem "Einrasten" des Nachführreglers, wenn also die geschätzten Koordinatenachsen $d_e$, $q_e$ kongruent mit den physikalischen Koordinatenachsen d, q des magnetischen Feldes der einen oder mehreren Permanentmagneten auf dem Polrad 16 sind, auch die jeweiligen Pfeilspitzen bzw. Orientierungen der realen und geschätzten Koordinatenachsen übereinstimmen bzw. letztere an das tatsächliche magnetische Feld des Polrads 16 mit einem oder mehreren Permanentmagneten richtig ausgerichtet sind.

Deshalb wird in der nachfolgenden Phase 2 der Eisen-Sättigungseffekt ausgenutzt, um einen etwaigen 180°-Fehler zu erkennen und zu korrigieren. Gemäß Schritt 201 wird weiter in Richtung der d-Achse hochfrequenter Strom injiziert, jedoch nun mit einer wesentlich größeren Amplitude (siehe auch Figur 4). Infolge der Sättigung bzw. Vormagnetisierung durch die einen oder mehreren Permanentmagnete des Polrads 16 wird die differenzielle bzw. inkrementelle Induktivität der Statorwicklungen in magnetischer Feldrichtung kleiner als in (der um 180° gedrehten) Gegenrichtung. Deshalb ergibt sich in Phase 2 die in Figur 4 gezeigte, unsymmetrische Stromkurve. Weisen dabei die positiven Halbwellen größere Amplituden als die negativen auf, ist die geschätzte Koordinatenachse $d_e$ nicht nur mit ihrer Pfeilschaft-Richtung kongruent mit dem magnetischen Feld der einen oder mehreren Permanentmagnete des Polrades 16, sondern auch mit ihrer Pfeilspitze bzw. Orientierung an das tatsächliche magnetische Feld ausgerichtet. Eine Korrektur ist nicht nötig. Umgekehrt, wenn die Amplituden der negativen Strom-Halbwellen (wie es Figur 4 zeigt) größer sind, dann ist eine 180°-Korrektur notwendig.

Im mathematischen Sinne bedeutet diese Unsymmetrie, dass die Strom-Vektorkomponente $i_d$ neben der Grundschwingung (erste Harmonische) mit der Trägerfrequenz $\omega_c$ auch eine erste Oberschwingung (zweite Harmonische) mit der doppelten Frequenz enthält. Um diese zu ermitteln, sind gemäß Schritt 203 Summen $S_1$, $S_2$, $S_3$ jeweils von der ersten, zweiten und dritten Potenz der gemessenen d-Strom-Abtastwerte zu berechnen, und zwar über eine Mehrzahl vollständiger Perioden der Trägerfrequenz $\omega_c$. Diese Summen werden aber nicht gleich ab der ersten Stromperiode mit Amplitudenvergrößerung gemäß Schritt 201 ausgerechnet. Vielmehr wird gemäß einem zwischengeschobenen Schritt 202 der Ablauf eines Übergangs mit Einschwingvorgängen, welche die Stromkurve verzerren (siehe Figur 3) abgewartet. Beispielsweise werden von insgesamt zwanzig eingeprägten Stromperioden nur die letzten zehn abgetastet.

In der gemäß Figur 3 nachfolgenden Auswertungsphase 3 werden aus den gemäß Schritt 203 der Erfassungsphase 2 berechneten Summen $S_1$, $S_2$, $S_3$ die Amplituden der Grundschwingung $I_1$ (erste Harmonische) und der ersten Oberschwingung $I_2$ (zweite Harmonische) ermittelt. Dafür verwendet man in einem Auswertungsschritt 301 die in der oben angesprochenen Fundstelle "Detection of the stating rotor angle of a pmsm at standstill" von C. Brunotte u. a. wiedergegebene mathematische Methode bzw. entsprechende Gleichungen (siehe unter "Evaluating the second harmonic"). Unter der Annahme, dass der Betrag der ersten Oberschwingung $I_2$ wesentlich kleiner als die Amplitude der Grundschwingung $I_1$ ist, dass ein Betrag eines etwaigen Gleichstrom-Offsets ebenfalls wesentlich kleiner als die Amplitude der Grundschwingung ist, und dass eine Abtastzeit für die d-Strom-Abtastwerte wesentlich kleiner als der Kehrwert der (in der Erfassungsphase 2 verminderten)

Trägerfrequenz $\omega_c$ ist, ergibt sich aus den Gleichungen der genannten Fundstelle:

$$I_1 = \sqrt{2S_2 / k};$$

$$I_2 = 2S_1 / k - \frac{2S_3}{3S_2},$$

wobei k die Gesamtzahl der Abtastwerte ist. Indem für die Berechnung der Amplitude der Grundschwingung $I_1$ die zweite Potenz der gemessenen d-Strom-Abtastwerte verwendet wird, ist bei der berechneten Grundschwingung ein etwaiges Gleichstrom-Offset bereits ausgemittelt bzw. herausgerechnet. In einem nächsten Abfrageschritt 302 wird der Betrag der ermittelten Amplitude der ersten Oberschwingung mit der ermittelten Amplitude der Grundschwingung verglichen. Dadurch wird geprüft, ob die Amplitude der ersten Oberschwingung einen bestimmten Prozentwert $\Delta_{min}$ (Mindestsättigungspegel) bezogen auf die Grundschwingungsamplitude erreicht hat. So gewinnt man eine Information, ob die Sättigung des die Motorinduktivitäten durchsetzenden Eisens genügend ausgeprägt ist, um ein zuverlässiges Ergebnis zu gewährleisten. Ein beispielhafter Mindestsättigungspegel umfasst etwa den Bereich von 2% - 6%. Wird der Mindestsättigungspegel nicht erreicht oder nicht überschritten, wird in eine Fehlerprozedur "Fehler" verzweigt. Wird die Plausibilitätsbedingung entsprechend dem Mindestsättigungspegel $\Delta_{min}$ erfüllt, wird in einem nächsten Abfrageschritt 303 (wie an sich aus der oben angesprochenen Fundstelle "Newstand-still position detection strategy for ..." von Kim et al an sich bekannt) aufgrund des Vorzeichens der Amplitude $I_2$ der ersten Oberschwingung entschieden, ob eine Korrektur um den Winkelwert 180° notwendig ist (siehe auch Figur 2b). Ist die Amplitude $I_2$ der ersten Oberschwingung nicht positiv, ist bei der Magnetflussorientierung des Polrads 16 ein Südpol detektiert, so dass der Pollagewinkel $\varphi_e$ gemäß Additionsschritt 304 um ein 180° zu erhöhen ist. Andernfalls ist ein Nordpol detektiert, und der Drehzahl- und Stromregler kann gemäß einem Einschaltschritt 305 aktiviert werden.

Wichtig ist, dass in der Erfassungsphase 2, dortiger Schritt 201 die Amplitude der eingeprägten HF-Spannung so hoch eingestellt wird, dass die Plausibilitätsbedingung des Erreichens des Mindestsättigungspegels $\Delta_{min}$ sicher erfüllt wird. Die Amplitudenerhöhung kann einerseits durch Vergrößerung der Amplitude des von der Injektionssignalquelle 11 eingeprägten HF-Signals, zusätzlich oder alternativ auch durch Verminderung der Trägerfrequenz erfolgen. In letzterem Fall findet eine Verminderung der Reaktanz statt, was ebenfalls zu einer Stromerhöhung führt.

In den Oszillogrammen gemäß Figur 4 sind die zeitlichen Verläufe der d-Stromvektorkompenente, des mit einem Absolutwertgeber gemessenen Pollagewinkels $\varphi$ des Polrads bzw. Läufers 16 des Elektromotors, sowie der im Antriebsregelkreis geschätzte Pollagewinkel $\varphi_e$ sowohl für die Injektionsphase 1 als auch die Erfassungsphase 2 wiedergegeben. Erkennbar ist die deutliche Amplitudenerhöhung in der Erfassungsphase 2 gegenüber der Injektionsphase 1 sowie der Einschwingvorgang beim Übergang von der Phase 1 zur Phase 2. Deutlich sichtbar ist auch, dass die negativen Halbwellen des D-Stroms in der Phase 2 eine um den Differenzbetrag $\Delta x$ größere Amplitude aufweisen als die positiven Halbwellen. Entsprechend weicht der regelintern geschätzte Pollagewinkel $\varphi_e$ um etwa 180° vom gemessenen Pollagewinkel $\varphi$ ab, und es ist eine 180°-Korrektur notwendig.

**Bezugszeichenliste**

| | |
|---|---|
| 1 | Stator |
| 2 | Umrichter |
| S1, S2 | Stromsensoren |
| 3 | Phasentransformationseinheit |
| $i_\alpha$, $i_\beta$ | Stromvektorkomponenten |
| 4 | Koordinaten-Transformationseinheit |
| $i_d$, $i_q$ | Strom-Längs- und Quer-Vektorkomponenten |
| $I_d$, $I_q$ | Längs- und Querstromregler |
| $I_{dsoll}$ $i_{qsoll}$ | Längs- und Querstrom-Sollwerte |
| 5 | Geschwindigkeitsregler |
| $\omega_{soll}$ | Drehzahlsollwert |
| 6 | Nachführregler |
| $\omega_e$ | geschätzte elektrische Drehzahl |
| $\varphi_e$ | Winkel |
| 7 | dritte Koordinaten-Transformationseinheit |
| $u_d$, $u_q$ | Längs- und Querspannungsvektorkomponenten |
| $u_\alpha$, $u_\beta$ | Spannungsvektorkomponente |
| 8 | 2-zu-3 Phasentransformationseinheit |
| $u_1$, $u_2$, $u_3$ | Phasen |
| 9 | Demodulationsmodul |
| 10 | Bandpass-Filter |
| $\omega_c$ | Träger-Kreisfrequenz |
| 11 | Injektionssignalquelle |
| $u_0$ | Amplitude |
| $i_1$, $i_2$ | Statorströme |
| $i_{q\_c}$ | Trägerfrequenzstrom-Querkomponente |
| $i_{d\_c}$ | Trägerfrequenzstrom-Längskomponente |
| 12 | Summierglied |
| 13 | Signums-Glied |
| 14 | Multiplizierglied |
| $i_{q\text{-}dem}$ | demodulierter Querstrom |
| PI | Proportional-Integralglied |
| 15 | Integrationsglied |
| $\Delta\varphi_a$, $\Delta\varphi_b$ | Winkelabweichung |
| S-N | Magnetflussrichtung |

| | |
|---|---|
| 16 | zweipoliges Polrad |
| 17a, 17b | Nachführdrehung |
| $\Delta x$ | Amplitudenunterschied |
| d, q | Koordinatenkreuz |
| $d_e$, $q_e$ | Koordinaten-Achsenkreuz, geschätzt |
| 101 | erster Schritt |
| 102 | zweiter Schritt |
| 103 | dritter Schritt |
| 201 | Schritt |
| 202 | Schritt |
| 203 | Schritt |
| $S_1$, $S_2$, $S_3$ | Summen |
| $I_1$ | Grundschwingung |
| $I_2$ | Oberschwingung |
| 301, 302 | Auswertungsschritt |
| $\Delta_{min}$ | Mindestsättigungspegel |
| $\varphi_e$ | Pollagewinkel, geschätzt |
| 303 | Abfrageschritt |
| 304 | Additionsschritt |
| 305 | Einschaltschritt |
| $\varphi$ | Lagewinkel, gemessen |

**Patentansprüche**

1. Verfahren zur Ermittlung der anfänglichen Pollage ($\varphi_e$) eines Läufers eines Elektromotors, insbesondere eines Permanentmagnet-Läufers (16) einer elektrischen bürstenlosen Linear- oder Rotations-Maschine, für einen elektrischen feldorientierten Antriebregelkreis, mit folgenden Schritten:

- ein periodisches elektrisches Testsignal ($u_o$, $\omega_c$) wird in von ferromagnetischem Material wie Eisen durchsetzte Phasenwicklungen des Elektromotors eingeprägt,
- die Pollage ($\varphi_e$) oder Magnetflussrichtung (S-N) des Läufers (16) wird anhand von Messungen und Auswertungen zugehöriger Antwortsignale ($i_1$, $i_2$) aus dem Elektromotor im feldorientierten Antriebregelkreis geschätzt, und die entsprechende d-Achse eines rotorbezogenen d, q-Koordinatensystems des feldorientierten Antriebregelkreises wird deckungsgleich mit und/oder längs der Magnetflussrichtung (S-N) des Läufers (16) ausgerichtet,
- die Pollage ($\varphi_e$) beziehungsweise die Orientierung des d,q-Koordinatensystems wird über eine Auswertung des Spektrums der Antwortsignale anhand der Polarität oder Orientierung der Magnetflussrichtung (S_N) des Läufers (16) geprüft und, wenn ein Winkelfehler von 180 Grad vorliegt, entsprechend korrigiert, nachdem das Testsignal zur Herbeiführung einer Sättigung des ferromagnetischen Materials der Phasenwicklungen eingestellt oder angepasst wurde,

**dadurch gekennzeichnet, dass**
vor der Prüfung der Pollage auf Winkelfehler von 180 Grad eine Überprüfung (302) der Sättigung des ferromagnetischen Materials auf einen vorbestimmten Mindestsättigungspegel ($\Delta_{min}$) hin erfolgt.

2. Verfahren nach Anspruch 1, **dadurch gekennzeichnet, dass** die Sättigungsüberprüfung (302) über eine Fourier- oder sonstige Spektralanalyse (301) des Antwortsignals erfolgt, wobei ein Spektralanteil höherer Frequenz zu einem niederer Frequenz in ein Verhältnis gesetzt wird, welches auf Erreichen eines vorbestimmten Mindestwerts ($\Delta_{min}$) hin überwacht wird.

3. Verfahren nach Anspruch 1 oder 2, **dadurch gekennzeichnet, dass** die Auswertung des Spektrums eine Zerlegung der Antwortsignale zumindest in ihre erste und zweite Harmonische ($I_1$, $I_2$) umfasst, welche zueinander in ein Verhältnis gesetzt werden, das zur Überwachung des Mindestsättigungspegels ($\Delta_{min}$) verwendet wird.

4. Verfahren nach Anspruch 3, **dadurch gekennzeichnet, dass** geprüft wird, ob die Amplitude der zweiten Harmonischen ($I_2$) des Antwortsignals einen vorbestimmten Prozentwert der Amplitude der ersten Harmonischen ($I_1$) beziehungsweise Grundschwingung des Antwortsignals, beispielsweise 2% bis 6%, erreicht hat.

5. Verfahren nach einem der vorangehenden Ansprüche, **dadurch gekennzeichnet, dass** bei der Sättigungsüberprüfung (302) Mittel zur Elimination und/oder Kompensation eines Offset-Pegels des Antwortsignals verwendet werden.

6. Verfahren nach Ansprüche 3 und 5 oder 4 und 5, **dadurch gekennzeichnet, dass** die Mittel zur Offset-Elimination und/oder -Kompensation mathematische Methoden der quadratischen Mittelwertbildung bei der Verarbeitung der ersten Harmonischen umfassen.

7. Verfahren nach einem der vorangehenden Ansprüche, **dadurch gekennzeichnet, dass** während der Ermittlung der anfänglichen Pollage ($\varphi_e$) ein Lage-, Geschwindigkeits- und/oder Stromregler ($5$, $I_d$, $I_q$) des Antriebregelkreises in einem ausgeschalteten oder sonst inaktiven Zustand (101) gehalten wird.

8. Verfahren nach einem der vorangehenden Ansprüche, wobei der feldorientierte Antriebregelkreis dazu eingerichtet ist, Messwerte von einem mehrphasigen Motor-Iststroms ($i_1$, $i_2$) in Abhängigkeit von der ermittelten Pollage ($\varphi_e$) und/oder der Läufer-Magnetflussrichtung (S_N) in ein läuferflussbezogenes d,q-Koordinatensystem zu einer Längsstromkomponente ($i_d$) und einer Querstromkomponente ($i_q$) zu transformieren, und die Quer- und Längsstromkomponenten vom Ist-Strom einem Vergleich mit vorgegebenen Quer- und Längsstromkomponenten ($i_{dsoll}$, $i_{qsoll}$) eines Stromsollwerts zu unterwerfen, und wobei das Testsignal dem Elektromotor, insbesondere dessen Statorwicklungen, als Längsstrom- oder -spannungskomponente ($u_d,i_d$) vorgeben wird, **gekennzeichnet durch** folgende Schritte:

a) von der Längsstromkomponente ($i_d$) des Iststroms werden diskrete Abtastwerte gebildet,
b) es wird zumindest von der ersten, zweiten und dritten Potenz der Abtastwerte jeweils eine Summe (S1,S2,S3) über eine Mehrzahl vollständiger Perioden des Antwortsignals gebildet,
c) aus den Summen (S1,S2,S3) werden über an sich bekannte mathematische Mittel die Amplituden ($I_1,I_2$) der ersten und der zweiten Harmonischen ermittelt,
d) die Amplituden ($I_1,I_2$) werden miteinander daraufhin verglichen, ob zur Erreichung des Mindestsättigungspegels ($\Delta_{min}$) die Amplitude ($I_2$) der zweiten Harmonischen einen vorbestimmten Bruchteil der Amplitude ($I_1$) der ersten Harmonischen aufweist.

9. Verfahren nach einem der vorangehenden Ansprüche,

- wobei Pollage-Ermittlung nahtlos über den gesamten Geschwindigkeitsbereich einschließlich Stillstand des Läufers (16) erfolgt,
- unter Verwendung eines für höhere Geschwindigkeiten geeigneten mathematischen Maschinenmodells, wobei aus dem Einfluss einer den den Statorstrom beeinflussenden Läufer-Rück-EMK auf die LäuferGeschwindigkeit und/oder -Lage geschlossen und ein entsprechender Modell-Geschwindigkeits- und/oder Lagewert ($\omega_e$, $\varphi_e$) erzeugt wird,
und unter Verwendung eines für niedrigere Geschwindigkeiten bis einschließlich Stillstand geeigneten Injektionsverfahrens, wobei stromführende Statorleiter mit einer Testsignalquelle (11) gekoppelt werden, und die resultierenden Statorströme auf lageabhängige Anisotropien in der Magnetstruktur der elektrischen Maschine hin ausgewertet und/oder gefiltert werden, woraus auf die LäuferGeschwindigkeit und/oder -Lage geschlossen und ein entsprechender Injektions-Geschwindigkeits und/oder Lagewert ($\varphi_e$) geschätzt wird,
**dadurch gekennzeichnet, dass** zur anfänglichen Pollageermittlung, einschließlich der Sättigungsüberprüfung, die Testsignalquelle (11) zum Einprägen des Testsignals ($u_o,\omega_c$) in die Phasenwicklungen der elektrischen Maschine verwendet wird.

10. Verfahren nach einem der vorangehenden Ansprüche, **dadurch gekennzeichnet, dass** das elektrische Testsignal ($u_o,\omega_c$) entsprechend etwa 5 % bis 35 % oder 10 % des Nennstroms des Elektromotors und für die Sättigungsüberprüfung (302) entsprechend etwa 90 % bis 220 % oder 100 % des Nennstroms eingestellt wird.

11. Verfahren nach einem der vorangehenden Ansprüche, **dadurch gekennzeichnet, dass** zur Schätzung der Pollage ($\varphi_e$) oder Magnetflussrichtung (S-N) des Läufers (16) ein Nachführregler (6) verwendet wird, mittels welchem vorzugsweise auf der Basis eines Proportional-Integralglieds (P1) mit nachgeordneter Integration (15) das gegebenenfalls vorher gefilterte und/oder bewertete Antwortsignal in einen der Pollage ($\varphi_e$) oder Magnetflussrichtung (S-N) entsprechenden Winkelwert umgerechnet wird.

12. Verfahren nach einem der vorangehenden Ansprüche, **gekennzeichnet durch** die Verwendung mit jedem Anlauf eines Elektromotors ohne Absolutgeber.

13. Verfahren nach einem der vorangehenden Ansprüche, **gekennzeichnet durch** die Verwendung bei einer Inbetriebnahme eines Elektromotors mit Absolutwert-Lagegeber, wobei ein Geberversatz ermittelt wird.

## Claims

1. A method for determining the initial pole position ($\varphi_e$) of a rotor of an electric motor, in particular of a permanent magnet rotor (16) of an electric brushless linear or rotating machine, for an electrical field-oriented drive control circuit, comprising the following steps:

- a periodic electrical test signal ($u_o,\omega_c$) is embossed in phase coils of the electric motor interspersed by ferromagnetic material such as iron,
- the pole position ($\varphi_e$) or magnetic flux direction (S-N) of the rotor (16) is estimated by means of measurements and evaluations of associated response signals ($i_1,i_2$) from the electric motor in the field-oriented drive control circuit, and the corresponding d axis of a rotor-related d,q co-ordinate system of the field-oriented drive control circuit is aligned congruently with and/or along the magnetic flux direction (S-N) of the rotor (16),
- the pole position ($\varphi_e$) and the orientation of the d,q co-ordinate system is checked by evaluating the spectrum of the response signals by means of the polarity or orientation of the magnetic flux direction (S_N) of the rotor (16), and when there is an angle error of 180 degrees, it is correspondingly corrected after the test signal for bringing about saturation of the ferromagnetic material of the phase coils has been set or adjusted,

**characterised in that**
before checking the pole position for angle errors of 180 degrees, testing (302) of the saturation of the ferromagnetic material at a pre-determined minimum saturation level ($\Delta_{min}$) takes place.

2. The method according to Claim 1, **characterised in that** the saturation test (302) takes place by means of a Fourier or other spectral analysis (301) of the response signal, a spectral portion of higher frequency being set at a ratio to a lower frequency which is monitored for achieving a pre-determined minimum value ($\Delta_{min}$).

3. The method according to Claim 1 or 2, **characterised in that** the evaluation of the spectrum comprises a breakdown of the response signals at least into their first and second harmonic ($I_1,I_2$) which are set at a ratio to one another which is used to monitor the minimum saturation level ($\Delta_{min}$).

4. The method according to Claim 3, **characterised in that** it is checked whether the amplitude of the second harmonic ($I_2$) of the response signal has achieved a pre-determined percentage value of the amplitude of the first harmonic ($I_1$) or the fundamental oscillation of the response signal, for example 2% to 6%.

5. The method according to any of the preceding claims, **characterised in that** in the saturation test (302) means are used for eliminating and/or compensating an offset level of the response signal.

6. The method according to Claims 3 and 5 or 4 and 5, **characterised in that** the means for eliminating and/or compensating the offset comprise mathematical methods for quadratic average formation when processing the first harmonic.

7. The method according to any of the preceding claims, **characterised in that** while determining the initial pole position ($\varphi_e$) a position, speed and/or current controller ($5,I_d,I_q$) of the drive control circuit is held in a switched-off or otherwise inactive state (101).

8. The method according to any of the preceding claims, the field-oriented drive control circuit being set up to transform measured values from a multi-phase motor actual current ($i_1,i_2$) dependently upon the pole position ($\varphi_e$) determined and/or the rotor magnetic flux direction (S_N) into a rotor flux-related d,q co-ordinate system into a longitudinal current component ($i_d$) and a transverse current component ($i_q$), and to subject the transverse and longitudinal current components from the actual current to a comparison with pre-specified transverse and longitudinal current components ($I_{ddesired}, i_{qdesired}$) of a current desired value, and the test signal being specified to the electric motor, in particular to the stator coils of the latter, as a longitudinal current or voltage component ($u_d,i_d$), **characterised by** the following steps:

    a) discrete sample values are formed from the longitudinal current component ($i_d$) of the actual current,
    b) a sum (S1,S2,S3) is respectively formed at least from the first, second and third power of the sample values over a plurality of complete periods of the response signal,
    c) the amplitudes ($I_1,I_2$) of the first and the second harmonics are determined from the sums (S1,S2,S3) by mathematical means known in their own right,
    d) the amplitudes ($I_1,I_2$) are then compared with one another, to see whether in order to achieve the minimum saturation level ($\Delta_{min}$) the amplitude ($I_2$) of the second harmonic has a pre-determined fraction of the amplitude ($I_1$) of the first harmonic.

9. The method according to any of the preceding claims,

    - pole position determination taking place seamlessly over the whole speed range including standstill of the rotor (16),
    - using a mathematical machine model suitable for higher speeds, a conclusion being drawn from the effect of a rotor back-EMF influencing the stator current upon the rotor speed and/or position, and a corresponding model speed and/or position value ($\omega_e,\varphi_e$) being generated,

    and using an injection method suitable for lower speeds including standstill, current-conveying stator conductors being coupled to a test signal source (11) and the resulting stator currents being evaluated for position-dependent anisotropisms in the magnet structure of the electric machine and/or being filtered, from which the rotor speed and/or position is concluded and a corresponding injection speed and/or position value ($\varphi_e$) is estimated, **characterised in that** for the initial pole position determination, including the saturation test, the test signal source (11) is used to emboss the test signal ($u_o, \omega_c$) in the phase coils of the electric machine.

**10.** The method according to any of the preceding claims, **characterised in that** the electric test signal $(u_o, \omega_c)$ is set correspondingly to approximately 5% to 35% or 10% of the nominal current of the electric motor and for the saturation test (302) correspondingly to approximately 90% to 220% or 100% of the nominal current.

**11.** The method according to any of the preceding claims, **characterised in that** in order to estimate the pole position $(\varphi_e)$ or magnetic flux direction (S-N) of the rotor (16) a compensating controller (6) is used by means of which, preferably upon the basis of a proportional integral member (PI) with downstream integration (15), the optionally previously filtered and/or evaluated response signal is converted into an angle value corresponding to the pole position $(\varphi_e)$ or magnetic flux direction (S-N).

**12.** The method according to any of the preceding claims, **characterised by** the use with every start-up of an electric motor without an absolute transmitter.

**13.** The method according to any of the preceding claims, **characterised by** the use when starting operation of an electric motor with an absolute value position transmitter, a transmitter offset being determined.

## Revendications

**1.** Procédé pour déterminer la position initiale des pôles $(\varphi_e)$ d'un rotor d'un moteur électrique, en particulier d'un rotor à aimant permanent (16) d'une machine électrique linéaire ou tournante sans balais, destiné à un circuit de régulation d'entraînement électrique à orientation de champ, comprenant les étapes suivantes :

- un signal de test électrique périodique $(u_o, \omega_c)$ est appliqué dans des

enroulements de phase du moteur électrique traversés par une matière ferromagnétique telle que le fer,

- la position des pôles $(\varphi_e)$ ou la direction du flux magnétique (S-N) du

rotor (16) est estimée à l'aide de mesures et d'évaluations de signaux de réponse respectifs $(i_1, i_2)$ émis par le moteur électrique dans le circuit de régulation d'entraînement, et l'axe $\underline{d}$ correspondant d'un système de coordonnées d,q rapporté au rotor du circuit de régulation d'entraînement à orientation de champ est aligné en coïncidence avec et/ou le long de la direction du flux magnétique (S-N) du rotor (16),

- la position des pôles $(\varphi_e)$ ou l'orientation du système de coordonnées d,q est contrôlée au moyen d'une évaluation du spectre des signaux de réponse à partir de la polarité ou de l'orientation de la direction du flux magnétique (S_N) du rotor (16) et, en présence d'une erreur angulaire de 180 degrés, est corrigée en conséquence, après que le signal de test ait été réglé ou adapté pour provoquer une saturation de la matière ferromagnétique des enroulements de phase,

**caractérisé en ce que**,

avant le contrôle de la position des pôles pour détection d'une erreur angulaire de 180 degrés, il s'opère une vérification (302) de la saturation de la matière ferromagnétique par rapport à un niveau de saturation minimal prédéterminé $(\Delta_{min})$.

**2.** Procédé selon la revendication 1, **caractérisé en ce que** la vérification de saturation (302) s'effectue au moyen d'une analyse de Fourier ou autre analyse spectrale (301) du signal de réponse, une composante spectrale de fréquence plus élevée étant comparée à une fréquence plus basse, afin de surveiller si elle atteint une valeur minimale $(\Delta_{min})$ prédéterminée.

**3.** Procédé selon la revendication 1 ou 2, **caractérisé en ce que** l'évaluation du spectre comporte une décomposition des signaux de réponse au moins en leurs première et deuxième harmoniques $(I_1, I_2)$, qui sont placées dans un rapport mutuel servant à surveiller le niveau de saturation minimal $(\Delta_{min})$.

**4.** Procédé selon la revendication 3, **caractérisé en ce qu'**il est vérifié si l'amplitude de la deuxième harmonique $(I_2)$ du signal de réponse a atteint un pourcentage prédéterminé de amplitude de la première harmonique $(I_1)$ ou de l'oscillation de base du signal de réponse, par exemple 2 % à 6 %.

**5.** Procédé selon une des revendications précédentes, **caractérisé en ce que**, lors de la vérification de la saturation (302), des moyens sont utilisés pour l'élimination et/ou la compensation d'un niveau de décalage du signal de réponse.

**6.** Procédé selon les revendications 3 et 5 ou 4 et 5, **caractérisé en ce que** les moyens pour l'élimination et/ou la compensation du décalage comprennent des méthodes mathématiques de formation de la moyenne quadratique lors du traitement de la première harmonique,

**7.** Procédé selon l'une des revendications précédentes, **caractérisé en ce que**, pendant la détermination de la position initiale des pôles $(\varphi_e)$, un régula-

teur de position, de vitesse et/ou de courant (5, $I_d$, $I_q$) du circuit de régulation d'entraînement est maintenu dans un état hors circuit ou dans autre état inactif (101).

8. Procédé selon l'une des revendications précédentes, dans lequel le circuit de régulation d'entraînement à orientation de champ est réglé pour transformer des valeurs mesurées d'un courant réel polyphasé du moteur ($i_1$, $i_2$), en fonction de la position de pôles ($\varphi_e$) déterminée et/ou de la direction de flux magnétique (S_N) du rotor, en un système de coordonnées d.q rapporté au flux du rotor pour générer une composante de courant longitudinale ($i_d$) et une composante de courant transversale ($i_q$), et pour soumettre les composantes de courant transversale et longitudinale du courant réel à une comparaison avec des composantes de courant transversale et longitudinale prédéterminées ($i_{dsoll}$, $i_{qsoll}$) d'une valeur de consigne de courant, et dans lequel le signal de test est appliqué au moteur électrique, en particulier à ses enroulements de stator, sous la forme de composantes longitudinales de courant ou de tension ($u_d$, $i_d$), **caractérisé par** les étapes suivantes :

 a) des valeurs d'exploration discrètes sont formées à partir de la composante de courant longitudinale ($i_d$) du courant réel,
 b) une somme (S1,S2, S3) de respectivement au moins la première, deuxième et troisième puissance des valeurs d'exploration est formée sur une pluralité de périodes complètes du signal de réponse,
 c) les amplitudes ($I_1$, $I_2$) des première et deuxième harmoniques sont déterminées à partir de sommes (S1, S2, S3) par des moyens mathématiques connus,
 d) les amplitudes ($I_1$, $I_2$) sont comparées les unes aux autres pour déterminer si, pour atteindre le niveau de saturation minimum ($\Delta_{min}$), l'amplitude ($I_2$) de la deuxième harmonique présente une fraction prédéterminé de l'amplitude ($I_1$) de la première harmonique.

9. Procédé selon l'une des revendications précédentes,

 - dans lequel la détermination de la position des pôles s'effectue sans interruption sur toute la plage de vitesse, y compris l'arrêt du rotor (16),
 - en utilisant un modèle mécanique mathématique approprié pour les

 vitesses élevées, auquel cas, à partir de l'influence d'une force contre-électromotrice du rotor influant sur le courant de stator, est déduite la vitesse et/ou la position du rotor et est générée une valeur de vitesse et/ou de position de modèle ($\omega_e$,$\varphi_e$) correspondante, et
 en utilisant un procédé d'injection approprié pour les basses vitesses jusqu'à et incluant l'arrêt, les conducteurs de stator conduisant le courant étant couplés à une source de signaux de test, et les courants de stator résultants étant évalués et/ou filtrés pour détermination des anisotropies dans la structure magnétique de la machine électrique, d'où est déduite la vitesse et/ou la position du rotor et est estimée une vitesse d'injection et/ou valeur de position ($\omega_e$, $\varphi_e$) correspondante,
 **caractérisé en ce que**, pour la détermination initiale de la position des pôles, y compris la vérification de la saturation, on utilise la source de signaux de test (11) pour appliquer le signal de test ($u_o$, $\omega_c$) dans les enroulements de phase de la machine électrique.

10. Procédé selon l'une des revendications précédentes,
 **caractérisé en ce que** le signal de test électrique ($u_o$, $\omega_c$) est réglé sur environ 5 % à 35 % ou 10 % du courant nominal du moteur électrique et, pour la vérification de la saturation (302) sur environ 90 % à 220 % ou 100 % du courant nominal.

11. Procédé selon l'une des revendications précédentes,
 **caractérisé en ce que**, pour l'estimation de la position des pâles ($\varphi_e$) ou de la direction du flux magnétique (S-N) du rotor (16), on utilise un régulateur de poursuite (6) au moyen duquel, de préférence sur la base d'un élément proportionnel intégral (PI) avec intégration aval (15), le signal de réponse éventuellement préalablement filtré et/ ou évalué est converti en une valeur angulaire correspondant à la position des pôles ($\varphi_e$) ou à la direction du flux magnétique (S-N).

12. Procédé selon l'une des revendications précédentes, **caractérisé en ce qu'**il est utilisé à chaque démarrage du moteur électrique sans capteur de valeur absolue.

13. Procédé selon l'une des revendications précédentes, **caractérisé en ce qu'**il est utilisé lors de la mise en service d'un moteur électrique comportant un capteur de position ou valeur absolue, dans lequel on détermine un décalage du capteur.

Fig. 1

Fig. 2

## Phase 1: Hf-Injektion

101 — Drehzahl- bzw. Stromregler aus

102 — Hochfrequenzinjektion in d-Richtung:
$$u_{d\_c} = u_0 \sin \omega_c t$$

103 — Warten auf Einrasten des Nachführ-Reglers

## Phase 2: Erfassen

201 — Vergrößerung der Amplitude des HF-Stromes (durch Vergrößerung von $u_0$ bzw. Minderung von $\omega_c$)

202 — Warten auf Einschwingen

203 — $S_1 = \Sigma i_d$; $S_2 = \Sigma i_d^2$; $S_3 = \Sigma i_d^3$; (über ganze Periodenzahl von $\omega_c$)

## Phase 3:Auswertung

301 — Berechnung von $I_1, I_2$ auf der Basis von $S_1, S_2, S_3$

302 — $|I_2|/I_1 > \Delta_{min}?$
— Nein → Fehler

— Ja ↓

303 — $I_2 > 0?$
— Nein →

304 — Korrektur $\varphi_e = \varphi_e + 180°$

— Ja ↓

305 — Drehzahl- bzw. Stromregler ein

Fig. 3

EP 2 194 641 B1

Injektionsphase 1   Erfassungsphase 2

$i_d$

$0_{Volt}$ OV

$\varphi_e$

$\Delta x$

$\varphi$

2.00 V

Erfassungsphase 2

$i_d$

$0_{Volt}$

$i_d$

$\Delta x$

180°-
Fehler

$\varphi_e$

$\varphi$

2.00 V

Fig.4

EP 2 194 641 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 10056879 C1

**In der Beschreibung aufgeführte Nicht-Patentliteratur**

• **Joohn Sheok Kim ; Seung Ki Sul.** New Stand-still Position Detection Strategy For PMSM Drive Without Rotational Transducers. *APEC '94, Ninth Annual Applied Power Electronics Conference and Exposition, Conference Proceedings,* 1994, vol. 1, 363-369

• **BRUNOTTE, C. ; SCHUMACHER, W.** Detection of the starting rotor angel of a pmsm at standstill. *7th European Conference on Power Electronics and Applications (Proceedings EPE),* 1997, S. 1250-1253

• **M. Linke ; R. Kennel ; J. Holtz.** Sensorless speed and position control of synchronous machines using alternating carrier injection. *IEEE International Electric Machines and Drives Conference IEMDC'03,* 01. Juni 2003

• **T. Aihara ; A. Toba ; T. Yanase ; A. Mashimo ; K. Endo.** Sensorless torque control of salient-pole synchronous motor at zero-speed operation. *IEEE Trans. Power Electron.,* Januar 1999, vol. 14 (1), 202-208

• **LOCCI N et al.** Rotor position detection in variable reluctance motors. *ELROMA-92, technical papers of the third International Conference on Electrical Rotating Machines,* 15. Januar 1992, vol. 2, VIA/60-7

• **Nach Kim et al.** *New Stand-still Position Detection Strategy for ..*

• **Marco Linke et al.** *Sensorless speed and position control of a synchronous machine using alternating carrier injection*

• **C. Brunotte et al.** *Detection of a starting rotor angel of a pmsm at standstill*

• **Takashi Aihara et al.** *Sensorless torque control of a salient-pole synchronous motor at zero-speed operation,* 205-206

• **O. C. Ferreira ; R. Kennel.** Encoderless control of industrial servo drives. *12th International Power Electronics and Motion Control Conference,* August 2006, 1962-1967